# EUROPEAN PATENT SPECIFICATION

(11) **EP 0 283 450 B1**
(45) Date of publication and mention of the grant of the patent: **22.09.1993**
(21) Application number: 88830110.8
(22) Date of filing: 18.03.1988
(51) Int. Cl.: H01S 3/03, H01S 3/08, H01S 3/041, H01S 3/086

(54) **A FIR (far infrared radiation) laser cavity optically pumped and having a carrying tube**
Laser-Kavität mit Trägerrohr für einen optisch gepumpten FIR-(im fernen Infrarot betriebenen)-Laser
Cavité laser avec un tube porteur pour un laser FIR (opérant dans l'infrarouge lointain) à pompage optique

(30) Priority: 20.03.1987 IT 4775787
(43) Date of publication of application: 21.09.1988
(73) Proprietor: Ente per le nuove tecnologie, l'energia e l'ambiente ( ENEA), I-00198 Roma (IT)
(72) Inventor: Boscolo, Ilario, I-20026 Bussero (Milano) (IT); Pastore, Gino, I-63100 Lecce (IT)
(74) Representative: Sarpi, Maurizio

(56) References cited:
- US-A- 3 478 608
- US-A- 3 928 816
- NAVY TECHNICAL DISCLOSURE BULLETIN, vol. 8, no. 2, December 1982, pages 65-68, Washington, US; S.C. SEITEL et al.: "Optical translation device"
- INSTRUM. & EXPERIMENTAL TECHN., vol. 20, no. 2, 1977, pages 530-533, Plenum Publishing Corp., New York, US; D.N. YUNDEV: "Compact HCN laser"

## Description

The object of this invention is a cavity for the optically pumped far infrared lasers (FIR) particularly adapted for high power FIR lasers. Said cavity has, as a load bearing structure, a pair of coaxial tubes of heatproof dielectric material such as for instance "Pyrex®" or quartz.

The known technique for the cavities of the laser of the above type, provides a device which comprises four rods of super Invar® or of quartz (of which the diameter is larger than 2 cm) which form the load bearing structure of the various components of the laser such as heads, tube, the system for connecting the tube with the heads and the translating system for the cavity tuning. In this device the required mechanical and thermal stability is ensured by the good design of the heads and of the tuning mechanism. Such system shows anyway different thermal elongations of the different materials by which the several pieces are comprised and local non-elastic deformations of the materials due to the strength of 20-25 kg applied to both the laser heads by the atmospheric pressure (the inner diameter of the Pyrex® tube is always greater than 25 mm and in some lasers it can be greater than 50 mm).

The problem of the mechanical and thermal stability is critical for the FIR lasers. This is due both because of the waveguide operation whereby to small deformations of the cavity (lower than one micron) significant variations correspond to the power and frequency, and because the gain curve is very narrow ( about some tenths of Mhz to which an elongation of 10 micron corresponds when the cavity length is 2 m long).

From the article of D.N YUNDEV,"Compact HCN laser" in Instrum. & Experimental Techn. ,Vol. 20, no.2, 1977, pages 530-533, there is known a FIR laser cavity comprising a load bearing tubular structure made of heatproof dielectric material which carries at its two ends the input and output heads provided with means for orienting the same according to x and y axes and which also comprises means for micrometric adjustment along the longitudinal axis of the reciprocal positions of the optics carried by the heads. Other tubular structures for use in laser systems are described in the US patent 3 928 816 and in the Navy Technical Disclosure Bulletin, vol. 8, no.2, December 1982, pages 65-68 where a differential thread system is employed for the micrometric adjustment of the reciprocal positions of the optics carried by the heads.

According to the invention, which is defined in claim 1, the load bearing tubular assembly, which carries at its two ends the input and the output heads, is made of two coaxial heatproof dielectric material tubes having the same length, with a space between them for the circulation of a cooling fluid in order to prevent the laser cavity from elongation due to the thermal expansion of the tubes.

The load bearing tubular assembly is further provided with a micrometric screw which is coaxial with the said tubular assembly and attached thereto and with "fixed" optics-carrying heads such that the micro-positioning is actuated by pressing a single O-ring only in the alignment. The system is very stable because of its cylindrical symmetry and furthermore it is much simpler from a mechanical point of view.

The cylindrical symmetry makes the assembly indifferent to pressure. Any water circulation , either in a closed circuit or from a tap, ensures the length stability of the optical cavity.

Another teaching of the present invention is the fact that the positioning of the laser is made simpler. In fact , because the laser may be, for example, a glass tube having a diameter of 4 cm, the laser is so light and compact that it can be micropositioned along the direction of the pump laser-beam. According to the old technique instead the alignment always requested the guide of the pump laser by means of a pair of mirrors.

Finally it is to be underlined that the cost of the cavity according to the invention is remarkably reduced with respect to the cost of the cavities as manufactured according to the preceeding techniques.

The invention will now be described with reference to the attached drawings.

In the drawings:

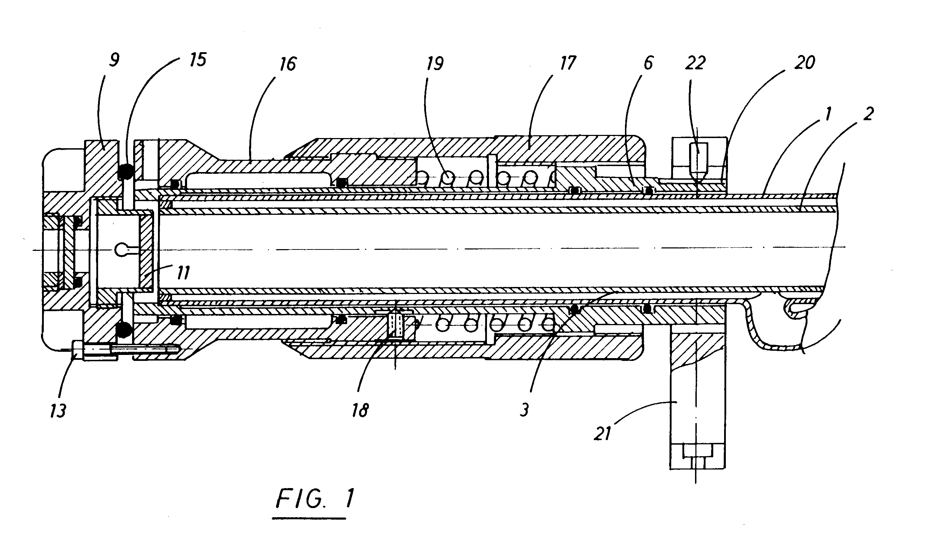

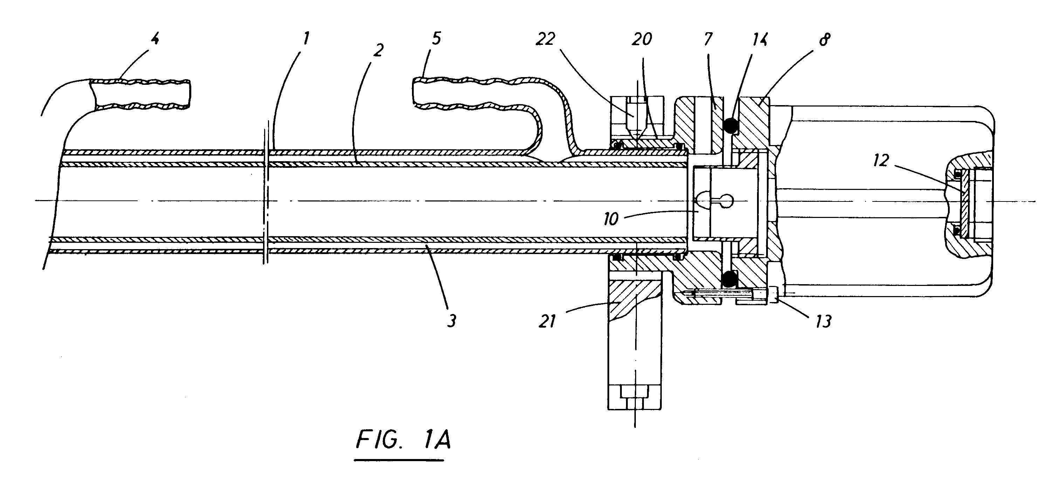

Fig. 1 and 1A, taken together show an axial section of the device according to the invention;
Fig.2 shows a front view;
Fig. 3 shows an output head to be used with a cavity laser according to the invention.

With reference to the drawings the numbers 1 and 2 indicate two coaxial tubes having the same length and comprising a dielectric heatproof material, for instance Pyrex® or other technologically fit material. Within space 3 which communicates with fitting 4 and 5, water circulates the purpose of which is to ensure the requested thermal stability and the cooling of the mechanical components.

At the ends of the outer tube 1 the fixed barrel 6 and the coupling sleeve 7 are attached by glueing. At the input 8 and output 9 heads which are provided with cooling fins, optics 10 and 11 are mounted. From the foregoing it clearly appears that the elongations of the mechanical components occur towards the center of the tube and the optics position remains unchanged.

The ZnSe window 12 is located at 10 cm from the hole of the input mirror 10. This allows to prevent a power high density on the window when the CO2 laser beam is focalized into the hole. The rotation about axes x,y perpendicular to the geometrical axis of the cavity ( and consequent alignment of the two optics) is accomplished by means of three screws 13 which are positioned at 120° on each head. An O ring 14 interposed between head 8 and sleeve 7 enables the fine positioning of the mirror by acting on the three screws 13. Similarly another tern of screws allows the adjustment of the output head 9 by means of second O ring 15.

Whenever a very high vacuum seal is required (for instance when the laser means implies the use of very expensive gases) the "conflat" seals technique can be used.

The micrometric adjustment of the cavity length is made by a differential screw system. Fixed barrel 6 has at one end a threading with 1 mm pitch and at the other end mobile barrel 16 slides which drags the output head 9 with the related optics. Mobile barrel 16 has at its outside a threading the pitch thereof is 0,9 mm. Cylinder 17 which is screwed on both barrels displaces one with respect to the other by 100 micron at one turn. Any rotation of the two barrels with respect to one another is prevented by plug 18. Furthermore between the two barrels a spring 19 is positioned by which the vacuum thrust is nearly totally compensated. The rotatory movement of cylinder 17 is then soft and can be obtained either by hand or by a motor. On fixed barrel 6 and on sleeve 7 three grooves 20 are provided which are angularly separated by 120°, from one another, the upper one being a bearing for screw 22 while the other two are attachments. The purpose of said grooves is for hanging up supports 21 which at their turn by means of similar screws 22 arranged at 120° allow fine displacements of the whole laser.

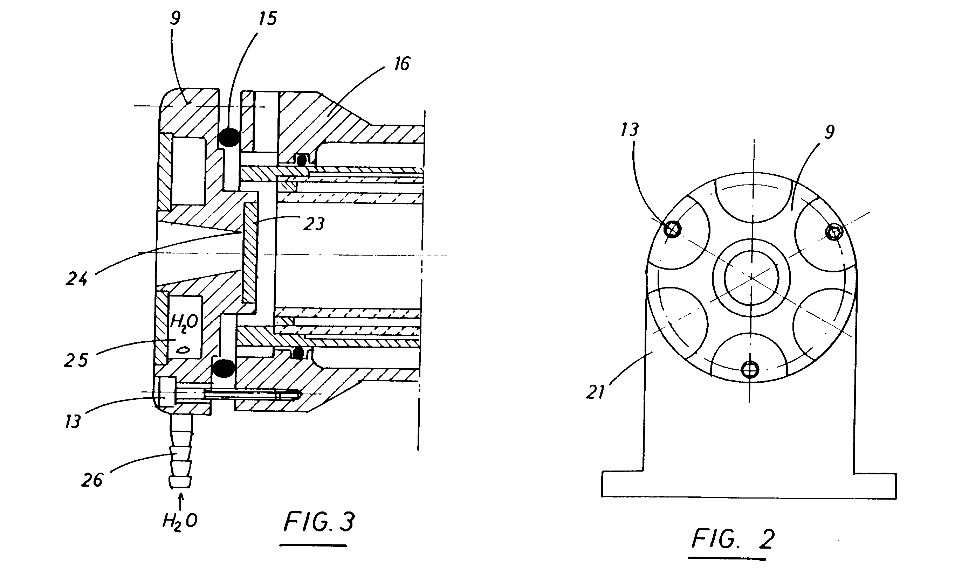

The gas input is through a hole which is provided on the fixed barrel and vacuum is applied through a hole provided in the sleeve. In fig. 3, as already said, an output head is illustrated according to one embodiment of the invention. Head 9, in this case carries the output reflector 23 which is totally glued on the same head with exception of the circular central area 24 (the diameter of which is about 1cm) from which the laser radiation goes out. In the annular space 25 cooling water is circulated which goes into and out through a pair of fitting 26.

This type of variant allows to eliminate the second window of crystal quartz as a vacuum seal inasmuch as disk 23 is glued over the most of its surface whereby there is no deformation danger. It obviously appears that by eliminating said window a considerable increase of the laser efficiency is provided for, in addition to an economical advantage as a consequence of the elimination of an expensive optics due to the material and to the required optical work.

A second important advantage is that the use of a quartz or silicon disk with surface facing the laser inside having a "coating" for reflecting the pump radiation is no more required. In fact, due to the cooling, the temperature of disk 23 reaches values about 50°C very far from the crack point of quartz or of silicon. The elimination of the "coating" means that the reflector is technologically very simple, readily manufactured and thus inexpensive.

The laser which is equipped with the cavity according to the invention provides a power stability, after about one hour conditioning, which is higher than 1% for various operating hours.

## Claims

1. An optically pumped FIR laser cavity comprising, in combination, a load bearing tubular structure made of heatproof dielectric material which carries at its two ends input (8) and output (9) heads provided with means (13) for orienting the same according to x and y axes, such structure being provided with a differential thread system with a center hole coaxial with said structure and fixed at one end of the same for micrometric adjustment along the longitudinal axis of the reciprocal positions of the optics carried by said heads, wherein said tubular structure is made of two coaxial heatproof dielectric material tubes (1, 2) having the same length with a space (3) between them for the circulation of a cooling fluid in order to prevent the laser cavity from elongation due to thermal expansion, and that said differential thread system comprises a cylinder or sleeve (17) coaxially mounted around said tubes (1, 2) and provided with threading at each of the two ends thereof of which one is engaged with a fixed barrel (6) coaxially attached to the outer tube (1) and the other is engaged with a mobile barrel (16) slidably mounted at the output head end of the tubular structure and fastened to the optics carrying output head (9), between the mobile barrel (16) and the fixed barrel (6) an opposing spring (19) being inserted which also is coaxial with the tubular structure, the purpose of said spring (19) being to contrast the vacuum thrust and to render the rotation of said cylinder (17) soft and then to slide the mobile barrel (16) along the longitudinal axis.

2. A cavity according to claim 1 characterized in that the output head (9) carries, as an output reflector, a crystal quartz or silicon plate (23) glued thereon which is axially centered about a central hole (24) located in said output head for the output of the far infrared radiation, said output head being surrounded by a space (25) for a refrigerating liquid.

3. A cavity according to claim 2 characterized in that the crystal quartz or silicon plate (23) is provided on the surface facing the laser inside with a CO2 laser radiation reflecting coating, to allow higher CO2 laser pumping power.

## Patentansprüche

1. Hohlraum für einen optisch gepumpten FIR-Laser, der in Kombination miteinander aufweist: einen eine Belastung tragenden, rohrförmigen, aus hitzebeständigem dielektrischem Material bestehenden Aufbau, welcher an seinen zwei Enden einen Eingangskopf (8) und einen Ausgangskopf (9) trägt, die mit Einrichtungen (13) zur Orientierung derselben bezüglich der X- und Y-Achse versehen sind, wobei der derartige Aufbau mit einem Differentialgewindesystem versehen ist, welches ein mit dem Aufbau koaxiales, zentrales Loch besitzt und an einem Ende des Aufbaus zur mikrometrischen Einstellung der reziproken Position der durch die Köpfe getragenen Optik entlang der Längsachse befestigt ist,
bei welchem
der rohrförmige Aufbau aus zwei koaxialen, hitzebeständigen Röhren (1,2) aus dielektrischem Material besteht, welche dieselbe Länge mit einem Raum (3) zwischen ihnen zur Zirkulation einer Kühlflüssigkeit besitzen, um den Laserhohlraum an einer Verlängerung aufgrund thermischer Expansion zu hindern, und
das Differentialgewindesystem einen Zylinder oder eine Hülse (17) aufweist, welcher oder welche koaxial um die Röhren (1,2) montiert ist und mit Gewinden an jedem der zwei Enden derselben vergehen ist, von denen eines mit einer befestigten Trommel (6) in Eingriff steht, die koaxial an der äußeren Röhre (1) angebracht ist, und das andere mit einer bewegbaren Trommel (16) im Eingriff steht, die an dem Ausgangskopfende des rohrförmigen Aufbaus verschiebbar montiert und an dem die Optik tragenden Ausgangskopf (9) befestigt ist, wobei zwischen der bewegbaren Trommel (16) und der befestigten Trommel (6) eine entgegenwirkende Feder (19) eingesetzt ist, welche auch koaxial mit der röhrenförmigen Struktur ausgerichtet ist, wobei es der Zweck der Feder (19) ist, dem Vakuumaxialdruck entgegenzuwirken und die Drehung des Zylinders (17) geschmeidig zu machen und außerdem die bewegbare Trommel (16) entlang der Längsachse zu verschieben.

2. Hohlraum nach Anspruch 1, dadurch gekennzeichnet, daß der Ausgangskopf (9) als einen Ausgangsreflektor einen Kristallquarz oder eine Siliziumplatte (23) auf ihm aufgeklebt trägt, welcher oder welche axial um ein zentrales Loch (24) zentriert ist, das sich in dem Ausgangskopf für den Austritt der weit im Infrarot liegenden Strahlung befindet, wobei der Ausgangskopf von einem Raum (25) für eine Kühlflüssigkeit umgeben ist.

3. Hohlraum nach Anspruch 2, dadurch gekennzeichnet, daß der Kristallquarz oder die Siliziumplatte (23) auf der Oberfläche, die dem Laserinneren gegenübersteht, mit einem CO₂-laserstrahlungsreflektierendem Überzug versehen ist, so daß eine höhere CO₂-Laserpumpleistung ermöglicht wird.

## Revendications

1. Cavité laser FIR, à pompage optique, comprenant, en association, une structure tubulaire porteuse de charge, conçue en un matériau diélectrique résistant à la chaleur, qui supporte au niveau de ses deux extrémités, des têtes d'entrée (8) et de sortie (9) pourvues de moyens (13) pour orienter ces dernières sur l'axe des X et l'axe des Y, une structure de ce type étant pourvue d'un système de filetage différentiel pourvu d'un trou central coaxial à ladite structure et fixée à une extrémité de cette dernière pour permettre d'effectuer un réglage micrométrique le long de l'axe longitudinal des positions mutuelles des fibres optiques supportées par lesdites têtes, dans laquelle ladite structure tubulaire est constituée de deux tubes coaxiaux d'un matériau diélectrique résistant à la chaleur (1, 2) présentant la même longueur, séparés par un espace (3) prévu pour la circulation d'un fluide de refroidissement afin d'éviter tout allongement de la cavité laser sous l'effet d'une dilatation thermique, et en ce que ledit système de filetage différentiel comprend un cylindre ou manchon (17) monté de manière coaxiale autour desdits tubes (1, 2) et pourvus d'un filetage à chacune des deux extrémités de ces derniers, une extrémité étant en prise avec une douille fixe (6) fixée de manière coaxiale sur le tube extérieur (1) et l'autre étant en prise avec une douille mobile (16) montée de manière à pouvoir coulisser sur l'extrémité de la tête de sortie de la structure tubulaire, et fixée à la tête de sortie (9) supportant les fibres optiques, un ressort d'opposition (19) étant inséré entre la douille mobile (16) et la douille fixe (6) et étant coaxial à la structure tubulaire, ledit ressort (19) ayant pour fonction de s'opposer à la poussée du vide et à permettre une rotation en douceur dudit cylindre (17) et le coulissement de la douille mobile (16) le long de l'axe longitudinal.

2. Cavité selon la revendication 1, caractérisée en ce que la tête de sortie (9) supporte une plaque de silicium ou de cristal de quartz (23), servant de réflecteur de sortie, collée sur ladite tête, et centrée, de manière axiale, autour d'un trou central (24) placé dans ladite tête de sortie en vue de la sortie du rayonnement dans l'infrarouge lointain, ladite tête de sortie étant entourée par un espace (25) prévu pour un liquide de réfrigération.

3. Cavité selon la revendication 2, caractérisée en ce que la plaque de silicium ou de cristal de quartz (23) est pourvue, sur la surface située en regard de l'intérieur du laser, d'un revêtement réfléchissant le rayonnement du laser à C02, pour obtenir une puissance de pompage supérieure du laser à C02 .
